# EUROPÄISCHE PATENTANMELDUNG

(11) **EP 3 563 982 A1**
(43) Veröffentlichungstag der Anmeldung: **06.11.2019**
(21) Anmeldenummer: 18170738.1
(22) Anmeldetag: 04.05.2018
(51) Int. Cl.: B25J 9/08, B25J 9/14, B25J 15/00, B25J 15/04, B25J 15/06, B25J 15/12

(54) **ANBAUANORDNUNG ZUM ANBAU AN ELASTISCH VERFORMBARE SAUGGREIFER UND MECHANISCHER AKTOR**

(71) Anmelder: J. Schmalz GmbH, 72293 Glatten (DE)
(72) Erfinder: SCHAAF, Walter, 72250 Freudenstadt-Grüntal (DE); SCHITTENHELM, Florian, 72280 Dornstetten (DE); KUOLT, Harald, 78586 Deilingen (DE)
(74) Vertreter: DREISS Patentanwälte PartG mbB

(57) **Zusammenfassung**

Die Erfindung betrifft eine Anbauanordnung (12) für Sauggreifer, welche ein erstes und ein zweites Ende (22, 24) und einen komprimierbaren Balg (20) aufweisen, wobei die Anbauanordnung (12) umfasst:
- eine obere Anbindungseinheit (28), in welche das erste Ende (22) oder das zweite Ende (24) eines ersten Sauggreifers (14) aufnehmbar ist,
- eine untere Anbindungseinheit (30), in welche das erste Ende (22) oder das zweite Ende (24) eines weiteren Sauggreifers (16)aufnehmbar ist, ,
- eine Aufnahme (32), in welche das nicht in der oberen Anbindungseinheit (28) aufgenommene Ende des ersten Sauggreifers (14) und zusätzlich das nicht in der unteren Anbindungseinheit (30) aufgenommene Ende des weiteren Sauggreifers (16) aufnehmar ist,
- ein Rückstellelement (46), welches mit der oberen Anbindungseinheit (28) und mit der unteren Anbindungseinheit (30) derart mechanisch verbunden ist, dass durch die Wirkung des Rückstellelements (46) eine Komprimierung des Balgs (20) des ersten Sauggreifers (14) und des weiteren Sauggreifers (16) asymmetrisch bezüglich der jeweiligen Längsachse (18) eingeschränkt ist.

## Beschreibung

Die Erfindung betrifft eine Anbauanordnung zum Anbau an elastisch verformbare Sauggreifer sowie einen mit Druckfluid betreibbaren, mechanischen Aktor.

Bei der Handhabung von Gegenständen bieten druckbetriebene (bzw. mit Druckfluid antreibbare) Aktoren einige Vorteile. Beispielsweise können mit Sauggreifern eine Vielzahl von Objekttypen zuverlässig und schonend manipuliert werden (d.h. gegriffen, verlagert usw. werden). Die notwendigen Einrichtungen für druckgetriebene Handhabungsvorrichtungen sind weit entwickelt und zuverlässig.

Es gibt jedoch Objekttypen, für die eine Manipulation mit Sauggreifern nicht ohne weiteres möglich ist. So ist z.B. für flauschige Objekte, stark luftdurchlässige Objekte oder Netz-Gebinde ein Ansaugen nur schwierig möglich. Hier ist oftmals der Einsatz von mechanischen Aktoren oder mechanischen Greifvorrichtungen erwünscht, um durch mechanischen Kontakt Kräfte auf das Objekt auszuüben (z.B. das Objekt zu klemmen, zu spannen oder zu bewegen).

Insofern kann es erforderlich sein, mechanische Aktoren oder Greifer in eine Infrastruktur für druckfluidbetriebenen Aktoren zu integrieren, z.B. in ein bestehendes Unterdruck-Versorgungssystem für Sauggreifer einzbauen. Unabhängig davon besteht ein Bedürfnis, mechanische Aktoren möglichst kosteneffizient in das Sortiment bzw. die Produktpalette eines Herstellers zu integrieren, ohne aufwändige Entwicklung von mechanischen Systemen vorantreiben zu müssen.

Vor diesem Hintergrund beschreibt die WO 2013/062463 A1 einen Einleger, welcher in den Saugraum eines Faltenbalgsaugers eingebaut wird und dadurch die Komprimierbarkeit des Faltenbalges abschnittsweise und asymmetrisch einschränkt. Wird ein mit diesem Einleger versehener Faltenbalg mit Unterdruck beaufschlagt, so wird der Faltenbalg asymmetrisch bezüglich seiner Längsachse komprimiert und führt insgesamt betrachtet eine laterale Auslenkbewegung durch. Allerdings ist die laterale Auslenkung durch die Abmessungen des Faltenbalgs begrenzt und der Innenraum des Saugers muss zum Einbau des Einlegers bearbeitet werden, was den Montageaufwand erhöht.

Der vorliegenden Erfindung liegt die Aufgabe zugrunde, aus üblichen Sauggreifern einen mechanischen Aktor in einfach montierbarer, zuverlässiger und kostengünstiger Weise aufzubauen.

Diese Aufgabe wird durch eine Anbauanordnung gemäß Anspruch 1 gelöst. Die Anbauanordnung dient zum Anbau an elastisch verformbare Sauggreifer.

Solche Sauggreifer weist üblicherweise ein erstes Ende und ein zweites Ende sowie einen Balg zwischen dem ersten und dem zweiten Ende auf. Der Balg erstreckt sich um eine Längsachse Balg auf, und ist insbesondere faltenbalgartig ausgebildet. Der Balg ist ausgehend von einer Ruhelage entlang seiner Längsachse komprimierbar. Insofern umgibt der Balg einen Balginnenraum, welcher bei Beaufschlagung mit Unterdruck komprimiert wird, d.h. sich entlang der Längsachse zusammenzieht (vorausgesetzt, die Saugseite ist abgedichtet, z.B. durch Anlage an einer anzusaugenden Fläche).

Die Anbauanordnung umfasst eine obere Anbindungseinheit, welche dazu ausgebildet ist, das erste Ende oder das zweite Ende eines ersten Sauggreifers aufzunehmen, wobei das nicht aufgenommene Ende von der oberen Anbindungseinheit freigegeben ist. Die Anbauanordnung umfasst außerdem eine untere Anbindungseinheit, welche dazu ausgebildet ist, das erste Ende oder das zweite Ende eines weiteren Sauggreifers aufzunehmen, wobei wiederum das nicht aufgenommene Ende von der unteren Anbindungseinheit freigegeben ist.

Die Anordnung umfasst außerdem eine Aufnahme, in welche das nicht in der oberen Anbindungseinheit aufgenommene Ende des ersten Sauggreifers (also das freigegebene Ende des ersten Sauggreifers) und das nicht in der unteren Anbindungseinheit aufgenommene Ende des weiteren Sauggreifers (also das freie Ende des weiteren Sauggreifers) aufgenommen wird. Die Aufnahme ist insbesondere derart ausgebildet, dass der Balginnenraum des ersten Sauggreifers mit dem Balginnenraum des weiteren Sauggreifers dichtend zu einem gesamten Balginnenraum für beide Bälge miteinander verbunden ist.

Die Anbauanordnung umfasst außerdem ein Rückstellelement, welches mit der oberen Anbindungseinheit und mit der unteren Anbindungseinheit mechanisch verbunden ist. Das Rückstellelement ist derart ausgebildet und angeordnet, dass es eine Komprimierung des Balgs des ersten Sauggreifers und des weiteren Sauggreifers asymmetrisch bezüglich der jeweiligen Längsachse einschränkt. Insofern ist die Komprimierbarkeit des Balgs in denjenigen Bereichen, in welchen das Rückstellelement wirkt, im Vergleich zu den übrigen Bereichen des Balges, die nicht von dem Rückstellelement beeinflusst sind, eingeschränkt. Mit anderen Worten wirkt das Rückstellelement im zusammengebauten Zustand von Anbauelement und Sauggreifer derart, dass die Sauggreifer in Bezug auf ihre jeweilige Längsachse asymmetrisch komprimierbar sind.

Da das Rückstellelement asymmetrisch bezüglich der Längsachse wirkt, wird der Balg bei Beaufschlagung eines Balginnenraums mit Unterdruck nicht mehr im Wesentlichen symmetrisch und axial entlang der Längsachse komprimiert, sondern zieht sich bezüglich der Längsachse asymmetrisch zusammen. Dadurch biegt sich der Balg bei Kompression in seitliche Richtung bezüglich der Längsachse, d.h. es erfolgt eine laterale Auslenkung. Aufgrund dieser lateralen Auslenkung kann die Gesamtanordnung aus Anbauanordnung mit Sauggreifern als mechanischer Aktor wirken, um Kräfte durch mechanischen Kontakt auf Gegenstände auszuüben. Insbesondere ist vorgesehen, dass die Gesamtanordnung (Anbauanordnung mitsamt eingebauten Sauggreifern) an einem Grundteil angeordnet ist, und eine Art Greiffinger bildet.

Die beschriebene Anordnung ermöglicht es, einen mechanischen Greifer aus Standardbauteilen bereitzustellen. Insofern können mit den Teilen der Anbauanordnung Sauggreifer verwendet werden, die als Standard-Sauggreifer (z.B. mit Faltenbalg) ausgebildet sind. Die Anbindungseinheiten können z.B. von Standard-Verbindern oder üblichen Schellen oder Klammern gebildet sein. Somit kann ein mechanischer Aktor kostengünstig bereitgestellt werden aus Bauteilen, die in Unterdruck-Handhabungssystemen ebenfalls Verwendung finden.

Die Aufnahme ist vorzugsweise zwischen der oberen Stutzenanbindung und der unteren Stutzenanbindung angeordnet.

Grundsätzlich kann die Anbauanordnung dazu eingerichtet sein, an eine Gruppe von mehr als zwei Sauggreifern angebaut zu werden, wobei die Sauggreifer entlang ihrer Längsachsen aufgereiht sind. Dabei werden insbesondere zwei benachbarte Sauggreifer in der beschriebenen Art verbunden.

Vorzugsweise werden Sauggreifer verwendet, deren Balg einen rotationssymmetrischen Querschnitt um die Längsachse herum aufweist. Ohne Wirkung des Rückstellelements würde sich ein solcher Sauggreifer symmetrisch entlang der Längsachse zusammenziehen, wenn sein Balginnenraum mit Unterdruck beaufschlagt wird. Aufgrund der Wirkung des Rückstellelements erfolgt, wie erläutert, eine asymmetrische Kompression begleitet von einer seitlichen Auslenkung der Gesamtanordnung.

Damit die Auslenkrichtung definiert ist, sind die Anbindungseinheit und/oder die Aufnahme vorzugsweise derart ausgebildet, dass die Anbauanordnung gegen eine Verdrehung um die Sauggreifer herum fixiert ist.

Insbesondere sind die obere Anbindungseinheit, die untere Anbindungseinheit, die Aufnahme und das Rückstellelement dazu ausgebildet, jeweils außerhalb des Balges (d.h. auf der dem Balginnenraum abgewandten Seite des Balges) des ersten und des weiteren Sauggreifers angeordnet zu werden. Insofern ist die Anbauanordnung zum Außenanbau an Sauggreifer ausgebildet. Sie wird in der Art eines Außenkorsetts an die Bälge der beiden Sauggreifer angebracht. Durch diesen Anbau von außen wird der Balginnenraum nicht beeinträchtigt. Somit kann es vermieden werden, Bauteile in den Innenraum des Balges einzuschieben oder einzudrücken. Ein Anbringen von außen an die Bälge vereinfacht die Montage.

Um die beschriebene asymmetrische Wirkung des Rückstellelements bezüglich der Längsachse zu erreichen, kann das Rückstellelement von der oberen Anbindungseinheit zur unteren Anbindungseinheit verlaufen und sich dabei selbst asymmetrisch in Bezug auf die Längsachse erstrecken. Insbesondere verläuft das Rückstellelement seitlich zur Längsachse versetzt. Insofern ist das Rückstellelement insbesondere nicht achsen-symmetrisch zur Längsachse des ersten und/oder weiteren Sauggreifers ausgebildet.

Die Bauteile der Anbauanordnung (insbesondere obere und untere Anbindungseinheit und/oder die Aufnahme) sind vorzugsweise derart angeordnet, dass die Längsachsen des ersten und des weiteren Sauggreifers miteinander fluchten, wenn sich die Sauggreifer in einer unkomprimierten Ruhelage befinden.

Um eine kontrollierte Biegung der beiden Bälge zu erzielen, kann das Rückstellelement auch mit der Aufnahme mechanisch verbunden sein. Dadurch kann vermieden werden, dass die miteinander verbundenen Sauggreifer mit ungewollten Kräften beaufschlagt werden und voneinander gelöst werden.

Vorzugsweise werden Sauggreifer verwendet, welche als erstes Ende einen Endstutzen zur Verbindung mit einer Unterdruckversorgung aufweisen, wobei das zweite Ende als Saugseite ausgebildet ist, welche mit einer insbesondere umlaufenden Dichtlippe zur Anlage an eine anzusaugende Fläche versehen ist.

Vorzugsweise sind die Anbindungseinheiten dann derart ausgebildet und angeordnet, sich die beiden eingesetzten Sauggreifer kopfüber gegenüberstehen.

Die obere bzw. untere Anbindungseinheit bildet insofern vorzugsweise eine obere bzw. untere Stutzenanbindung. In die obere Stutzenanbindung ist der Endstutzen des ersten Sauggreifers aufnehmbar. In die untere Stutzenanbindung ist der Endstutzen des weiteren Sauggreifers derart aufnehmbar ist, dass die Dichtlippe des weiteren Sauggreifers der Dichtlippe des ersten Sauggreifers zugewandt ist.

Ein vorteilhafter Aspekt besteht darin, dass die Aufnahme als Lippenfassung ausgebildet ist, in welche die Dichtlippe des ersten Sauggreifers und die Dichtlippe des weiteren Sauggreifers dichtend aufnehmbar ist. Vorzugsweise sind im eingebauten Zustand insbesondere die Dichtlippen der beiden Sauggreifer einander zugewandt. Insbesondere werden die Dichtlippen derart in die Lippenfassung aufgenommen, dass der Balginnenraum des ersten Sauggreifers mit dem Balginnenraum des weiteren Sauggreifers dichtend zu einem gesamten Balginnenraum für beide Bälge miteinander verbunden ist. Nach einer vorteilhaften Ausgestaltung liegen im eingebauten Zustand insbesondere die Dichtlippen der beiden Sauggreifer dichtend aneinander an.

Die Lippenfassung weist vorzugsweise einen ersten Klemmabschnitt und einen zweiten Klemmabschnitt auf. Die Dichtlippen der beiden Sauger können dann vorzugsweise zwischen den beiden Klemmabschnitten eingeklemmt werden, insbesondere derart, dass die Dichtlippen unmittelbar aneinander anliegen.

Die beiden Klemmabschnitte weisen vorzugsweise Rastelemente auf, welche ineinander einrastbar sind. Beispielsweise können an dem ersten Klemmabschnitt und an dem zweiten Klemmabschnitt jeweils Schnapphaken vorgesehen sein, welche an zugeordneten Bereichen des jeweils anderen Klemmabschnitts einrasten.

Vorzugsweise wirkt das Rückstellelement derart, dass es gegen eine Verformung aus einer Ruhelage heraus eine Rückstellkraft ausübt. In der Ruhelage weist das Rückstellelement und - sofern eingebaut - die Sauggreifer insbesondere eine Konfiguration auf, in welchen sich die gesamte Anordnung entlang der Längsachsen erstreckt. Vorzugsweise ist das Rückstellelement ausgehend von der Ruhelage elastisch verformbar. Dadurch bewirkt das Rückstellelement eine Rückverformung der Gesamtanordnung (Anbauanordnung mit eingebauten Sauggreifern), wenn keine Beaufschlagung der Bälge mit Unterdruck erfolgt. Mit anderen Worten wird die Auslenkbewegung des mechanischen Aktors (umfassend Anbauanordnung mit eingebauten Sauggreifern) durch eine Beaufschlagung der Balginnenräume mit Unterdruck erzielt. Die Rückbewegung hingegen erfolgt dann passiv aufgrund der Rückstellkraft des Rückstellelements.

Das Rückstellelement ist insbesondere derart ausgebildet, dass sich - in eingebautem Zustand - die Bälge der Sauggreifer bei Vorliegen der Ruhelage gerade entlang der jeweiligen Längsachsen erstrecken.

Für das Rückstellelement sind verschiedenartige Ausgestaltungen denkbar. Beispielsweise kann das Rückstellelement als federnd biegbares Federelement ausgebildet sein. Die Anbauanordnung ist dann insbesondere derart ausgestaltet, dass eine Verformung aus der Ruhelage mit einer lateralen Verbiegung des Federelements verbunden ist. Das Rückstellelement kann z.B. als einfaches Federband, z.B. Metallstreifen, ausgebildet sein.

Denkbar ist auch, dass das Rückstellelement als elastisch dehnbares und/oder elastisch stauchbares Federelement ausgebildet ist. Dabei ist die Anbauanordnung insbesondere derart ausgestaltet, dass eine Verformung aus der Ruhelage mit einer longitudinalen Dehnung und/oder einer longitudinalen Stauchung des Federelements verbunden ist. Ein solches Federelement kann auf einfache Weise von einem Abschnitt eines üblichen Schlauches (z.B. aus Gummi, Kunststoff) gebildet sein. Ein Rückstellelement der genannten Art kann z.B. auch durch einen elastischen Druckschlauch bereitgestellt werden. Dieser Druckschlauch kann dann auch dazu dienen, ein an der unteren Stutzenanbindung vorgesehenes Sauggreifelement mit Unterdruck zu versorgen, wie nachfolgend noch näher beschrieben.

Für faltenbalgartige Sauggreifer ergibt sich eine vorteilhafte Ausgestaltung dadurch, dass das Rückstellelement einen Formabschnitt aufweist, welcher derart ausgebildet ist, dass der Formabschnitt einige oder alle Falten des faltenartig ausgebildeten Balges in einem definierten und eingeschränkten Bereich des Umfanges des Balges um die Längsachse herum ausfüllt. Der Formabschnitt ist vorzugsweise aus einem elastisch komprimierbaren Material ausgebildet. Insbesondere ist der Formabschnitt derart ausgebildet, dass er nur einen bestimmten Winkelsektor um die Längsachse herum ausfüllt. Der Formabschnitt ist insbesondere als Falteneingriffsabschnitt zum Eingriff in Falten des Faltenbalges ausgebildet, d.h. der Formabschnitt umfasst insbesondere eine Mehrzahl an Vorsprüngen, die entlang der Längsachse nebeneinander liegen und derart ausgebildet sind, dass sie in Falten des Faltenbalges eingreifen können.

Die Anbauanordnung ist vorzugsweise modular aufgebaut. Grundsätzlich können dabei verschiedene Abschnitte zu Einheiten zusammengefasst sein.

Beispielsweise ist vorteilhaft, wenn die Aufnahme einen oberen Fassungsabschnitt und einen unteren Fassungsabschnitt aufweist, wobei der obere und der untere Fassungsabschnitt zusammengefügt werden können und beim Zusammenfügen die nicht in der oberen und unteren Anbindungseinheit aufgenommene Enden (d.h. die freigegebene Enden) der Sauggreifer aufnehmen. Dies ist insbesondere vorteilhaft bei der beschriebenen Ausgestaltung mit Dichtlippen, wobei die einander zugewandten Dichtlippen der beiden Sauggreifer zwischen dem oberen Fassungsabschnitt und dem unteren Fassungsabschnitt eingeklemmt werden.

Vorzugsweise umfasst das Rückstellelement dementsprechend ein oberes Federteil und ein unteres Federteil. Vorzugsweise sind dann der obere Fassungsabschnitt und das obere Federteil sowie die obere Anbindungseinheit als einstückiges Bauteil ausgestaltet. Ebenso können der untere Fassungsabschnitt und das untere Federteil sowie die untere Anbindungseinheit einstückig miteinander verbunden sein. Dadurch kann die Anbauanordnung durch zwei der genannten, einstückigen Verbundeinheiten bereitgestellt werden, was den Zusammenbau erleichtert.

Zur weiteren Ausgestaltung umfasst die Anbauanordnung ein unteres Abschlusselement. Dieses ist dazu angepasst, an die untere Anbindungseinheit und/oder an das in der unteren Anbindungseinheit aufgenommene Ende des weiteren Sauggreifers angeordnet zu werden. Vorzugsweise wird das untere Abschlusselement an den Endstutzen des weiteren Sauggreifers angeordnet.

Das untere Abschlusselement stellt insbesondere eine mechanische Kontaktfläche bereit. Diese Greiffläche ist dazu bestimmt, mit einem zu manipulierenden Objekt mechanisch in Kontakt zu kommen, wenn die Gesamtanordnung (Anbauanordnung mit eingesetzten Sauggreifern) als mechanischer Aktor wirkt. Dadurch wird die Funktionalität eines Greiffingers bereitgestellt. Die Kontaktfläche des Abschlusselements wirkt insofern als Greifbacke. Insbesondere können an der Kontaktfläche Reibungsstrukturen, Lamellen oder Ähnliches vorgesehen sein. Denkbar ist auch, dass die Kontaktfläche asymmetrisch (insbesondere nicht rotationssymmetrisch bezüglich der Längsachse) ausgestaltet ist und eine richtungsgebundene Greiffläche bereitstellt.

Das untere Abschlusselement ist vorzugsweise derart ausgebildet, dass der von dem Balg umschlossene Balginnenraum am Endstutzen (d.h. nach unten hin) abgedichtet wird.

Für die obere Stutzenanbindung kann ein oberes Abschlusselement vorgesehen sein, z.B. als Verbindungselement oder Nippel zur Unterdruckversorgung.

Das untere Abschlusselement kann ein Sauggreifelement zum Ansaugen eines zu greifenden Gegenstandes aufweisen. Insofern wirkt die Gesamtanordnung (Anbauanordnung mit eingesetzten Sauggreifern) dann als mechanischer Aktor, der zusätzlich bei Kontakt an einen zu manipulierenden Gegenstand eine Greifkraft durch Ansaugen aufbringt.

Zur weiteren Ausgestaltung ist ein Versorgungskanal zur Versorgung des Sauggreifelements mit Unterdruck vorgesehen. Dieser Versorgungskanal kann in vorteilhafter Weise in das Rückstellelement integriert sein und/oder in dem Rückstellelement selbst ausgebildet sein. Denkbar ist auch, dass das Rückstellelement insgesamt von einem elastischen Druckschlauch bereitgestellt ist, der den Versorgungskanal bereitstellt. Dies ist eine besonders kostengünstige Lösung mit Standardbauteilen.

Das untere Abschlusselement und/oder das Rückstellelement können Sensorelemente aufweisen (z.B. Drucksensor und/oder Näherungssensor und/oder Kraftsensor). Ebenso können Sensorelemente in der oberen und/oder unteren Anbindungseinheit vorgesehen sein. Dadurch kann z.B. überwacht werden, ob und in welchem Ausmaß die Gesamtanordnung lateral gebogen ist (Auslenkungskontrolle, Greifkontrolle), oder ob ein Gegenstand mit dem mechanischen Aktor in Kontakt ist. Falls der mechanische Aktor als Greifer ausgebildet ist, kann die Haltekraft detektiert werden. Eventuelle Kabelverbindungen für die Sensorik können in vorteilhafter Weise in oder an dem Rückstellelement angeordnet sein. Dadurch entsteht nur geringer Verkabelungsaufwand und die Gesamtanordnung ist robust und wenig fehleranfällig.

Die eingangs gestellte Aufgabe wird auch gelöst durch einen mit Druckfluid, insbesondere Druckluft und/oder Unterdruck, betreibbaren mechanischen Aktor. Der mechanische Aktor umfasst dann einen ersten und einen weiteren Sauggreifer der genannten Art sowie eine Anbauanordnung mit den vorstehend beschriebenen Merkmalen.

Die Erfindung wird im Folgenden anhand der Figuren näher erläutert.

Es zeigen:
- Figur 1: einen mechanischen Aktor umfassend zwei Sauggreifer und eine Anbauanordnung gemäß einer ersten Ausführungsform in Explosionsdarstellung;
- Figur 2: den mechanischen Aktor gemäß Figur 1 in zusammengefügtem Zustand;
- Figur 3: einen mechanischen Aktor mit zwei Sauggreifern und einer Anbauanordnung gemäß einer weiteren Ausführungsform in Explosionsdarstellung;
- Figur 4: mechanischer Aktor gemäß Figur 3 in zusammengefügtem Zustand;
- Figur 5: einen mechanischen Aktor umfassend zwei Sauggreifer und eine Anbauanordnung gemäß einer weiteren Ausführungsform in Explosionsdarstellung;
- Figur 6: Beispiel für eine erfindungsgemäße Anbauanordnung;
- Figur 7: weitere Ausgestaltungsmöglichkeiten für einen mechanischen Aktor und eine Anbauanordnung;
- Figur 8: mechanischer Aktor in Ruhelage;
- Figur 9: mechanischer Aktor gemäß Figur 8 in einer gebogenen Konfiguration (laterale Auslenkung).

In der nachfolgenden Beschreibung sowie in den Figuren sind für identische oder einander entsprechende Merkmale jeweils dieselben Bezugszeichen verwendet.

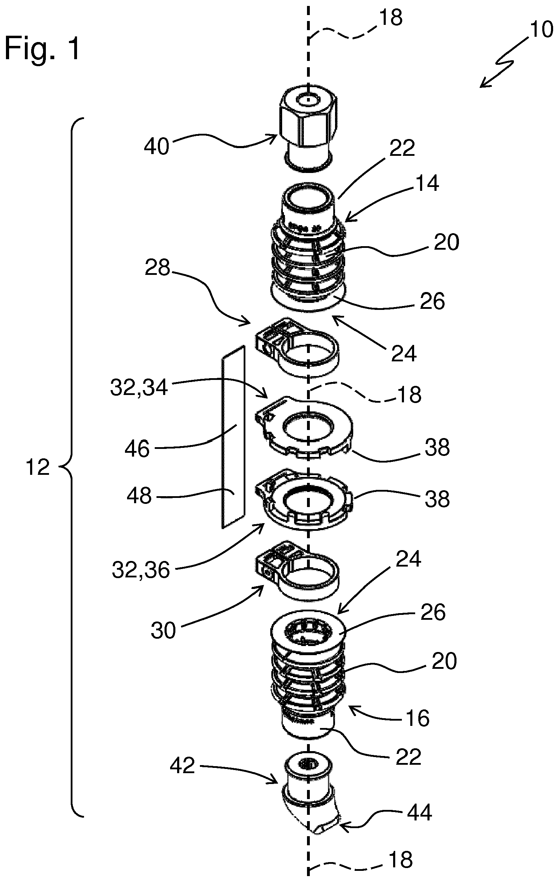

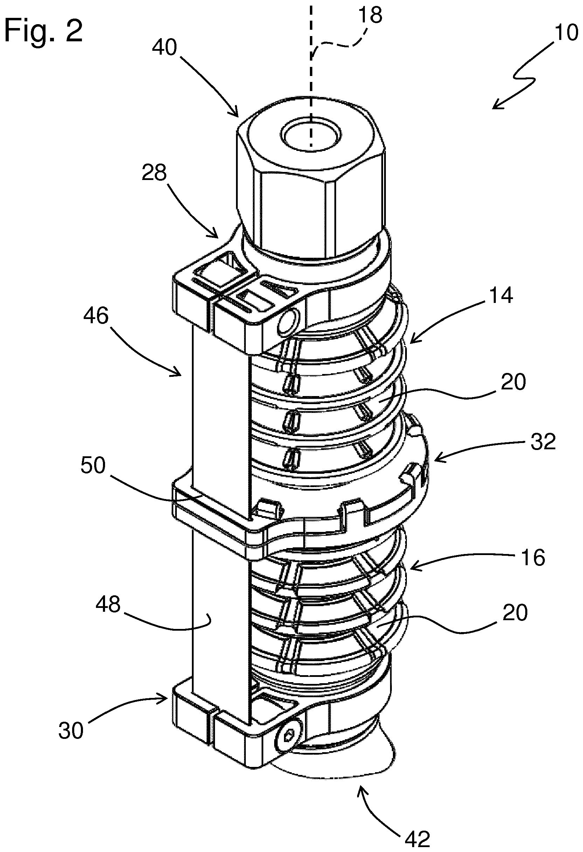

Die Figuren 1 und 2 zeigen einen mechanischen Aktor 10 umfassend eine mehrteilige Anbauanordnung 12, welche an einen ersten Sauggreifer 14 und einen weiteren Sauggreifer 16 angebaut ist (vgl. Figur 2).

Die Sauggreifer 14 und 16 können als Standard-Faltenbalgsauger ausgebildet sein. Die Sauggreifer 14, 16 umfassen jeweils einen sich um eine Längsachse 18 erstreckenden Balg 20 (hier: Faltenbalg), einen erstes Ende 22 und in zweites Ende 24. Im dargestellten Beispiel ist das erste Ende als Endstutzen 22 ausgestaltet und das zweite Ende bildet eine Saugseite 24 mit Dichtlippe 26. In einer gewöhnlichen, hier nicht vorrangig betrachteten Betriebsweise werden derartige Sauggreifer über ihren Endstutzen 22 an eine Unterdruckversorgung angeschlossen und mit der Saugseite 24 an eine anzusaugende Oberfläche (eines zu greifenden Gegenstandes) angesetzt. Wird der Sauggreifer mit Unterdruck beaufschlagt, so zieht sich der Balg 20 entlang der Längsachse 18 symmetrisch zusammen (nicht abgebildet).

Die Anbauanordnung 12 ist modular aufgebaut und umfasst insbesondere eine obere Anbindungseinheit in Form einer oberen Stutzenanbindung 28, eine untere Anbindungseinheit in Form einer untere Stutzenanbindung 30 sowie eine Lippenfassung 32 (Aufnahme 32). Die Lippenfassung kann wiederum mehrteilig aufgebaut sein und z.B. einen ersten Klemmabschnitt 34 und einen zweiten Klemmabschnitt 36 umfassen.

Die Anbauanordnung 12, insbesondere die oben genannten Bauteile, werden von außen an die Sauggreifer 14, 16 angebaut. Hierzu wird insbesondere die obere Stutzenanbindung 28 mit dem Endstutzen 22 des ersten Sauggreifers 14 mechanisch verbunden. Im dargestellten Beispiel wird die obere Stutzenanbindung 28 in der Art eine Schelle um den Endstutzen 22 herum gelegt und befestigt, z.B. verschraubt. Die untere Stutzenanbindung 30 kann entsprechend ausgestaltet sein, was jedoch nicht zwingend ist.

Die Lippenfassung 32 ist derart ausgebildet, dass die Dichtlippe 26 des ersten Sauggreifers 14 und die Dichtlippe 26 des weiteren Sauggreifers 16 in der Lippenfassung aufgenommen werden können. Vorzugsweise werden die Dichtlippen 26 derart aufgenommen, dass sie dichtend aneinander anliegen. Beispielsweise können die Dichtlippen 26 der Sauggreifer 14 und 16 aneinander anliegend zwischen dem ersten Klemmabschnitt 34 und dem zweiten Klemmabschnitt 36 der Lippenfassung 32 eingeklemmt werden. Die Klemmabschnitte 34, 36 der Lippenfassung 32 können hierzu insbesondere Rastabschnitte 38, z.B. in der Art von Klemmnasen, aufweisen. Diese Rastabschnitte 38 verrasten ineinander, so dass die Klemmabschnitte 34 und 36 eine zusammengefügte Einheit bilden und die Dichtlippen 26 in der Einheit aufgenommen sind.

Die Anbauanordnung 12 kann außerdem ein oberes Abschlusselement 40 aufweisen, welches in den Endstutzen 22 des ersten Sauggreifers 14 eingesetzt wird und z.B. zum Anschluss an eine Unterdruckversorgung dient (Nippel).

Für den unteren Sauggreifer 16 kann ein unteres Abschlusselement 42 vorgesehen sein. Dieses kann, wie in Figuren 1 und 2 skizziert, dazu ausgestaltet sein, in den Endstutzen 22 des weiteren Sauggreifers 16 eingesetzt zu werden. Denkbar ist jedoch auch, dass das untere Abschlusselement 42 mit der unteren Stutzenanbindung 30 mechanisch verbindbar ist. Das untere Abschlusselement 42 weist vorzugsweise eine mechanische Kontaktfläche 44 auf, die im Betrieb des mechanischen Aktors 10 als Kontaktfläche für die mit dem Aktor zu manipulierenden Objekte dient. Im Beispiel der Figuren 1 und 2 ist die mechanische Kontaktfläche 44 asymmetrisch bezüglich der Längsachse 18 und wirken insofern richtungsgebunden.

Die Anbauanordnung 12 umfasst ein Rückstellelement 46, welches mit der oberen Stutzenanbindung 28 und mit der unteren Stutzenanbindung 30 mechanisch verbunden ist.

Beispielsweise kann das Rückstellelement 48 als federnd biegbares Federelement, insbesondere Blattfeder 48, ausgebildet sein.

Das Rückstellelement 46 hat die Funktion, dass für die Sauggreifer 14 und 16, wenn sie in der Anbauanordnung 12 eingebaut sind, die Komprimierbarkeit des Balges 20 asymmetrisch bezüglich der jeweiligen Längsachse 18 eingeschränkt ist.

Diese Funktion wird insbesondere dadurch bereitgestellt, dass das Rückstellelement 46 lateral zur Längsachse 18 versetzt angeordnet ist (vgl. Figur 2). Im Beispiel des Federelements 48 können die obere Stutzenanbindung 28 und die untere Stutzenanbindung 30 jeweils Endabschnitte des Federelements 48 aufnehmen und axial zur Längsachse 18 versetzt fixieren (Figur 2). Die Lippenfassung 32 kann ebenfalls mit dem Rückstellelement 46 verbunden sein. Im Beispiel der Figur 2 ist das Federelement 48 durch eine entsprechende Durchführung 50 in der Lippenfassung 32 hindurchgeführt.

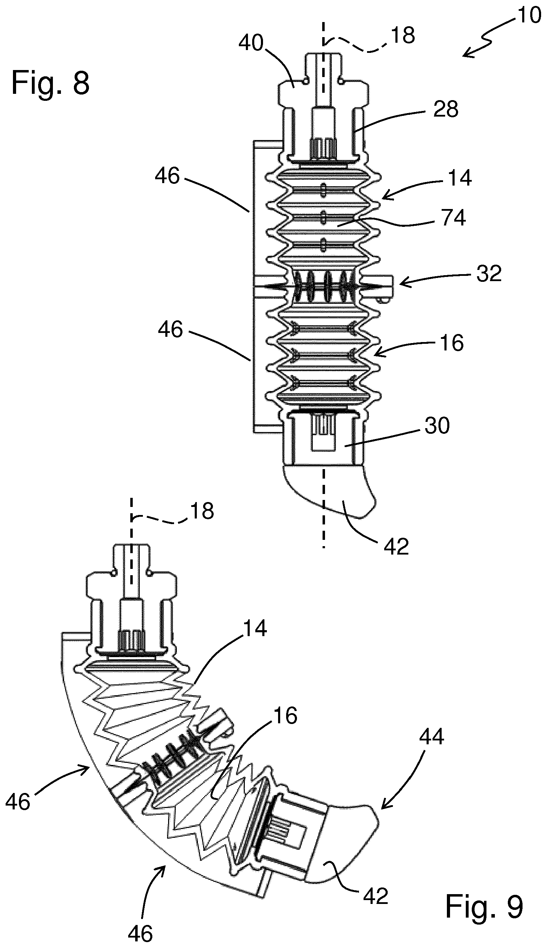

Wird im Beispiel der Figur 2 der mechanische Aktor 10 durch das obere Anschlusselement 40 mit Unterdruck beaufschlagt, so wird eine Kompression der Faltenbälge 20 hervorgerufen. Da das Rückstellelement 46 asymmetrisch bezüglich der Längsachse 18 wirkt, kann die Kompression der Bälge 20 jedoch nicht asymmetrisch bezüglich der Längsachse 18 erfolgen. Vielmehr biegt sich der mechanische Aktor 10 zu der dem Rückstellelement 46 abgewandten Seite (vgl. auch Figuren 8 und 9).

Das Federelement 48 ist ausgehend von der in Figur 2 gezeigten Ruhelage, in der sich das Federelement 48 gerade erstreckt, seitlich biegbar. Aufgrund seiner elastischen Eigenschaften übt das Federelement gegen eine Verformung aus der Ruhelage eine Rückstellkraft aus. Diese Rückstellkraft kann genutzt werden, um den mechanischen Aktor 10 wieder in seine Ausgangskonfiguration zurückzuführen.

Der modulare Aufbau der Anbauanordnung 12 ermöglicht eine Vielzahl verschiedener Ausgestaltungen für die einzelnen Bauteile, insbesondere für das Rückstellelement 46.

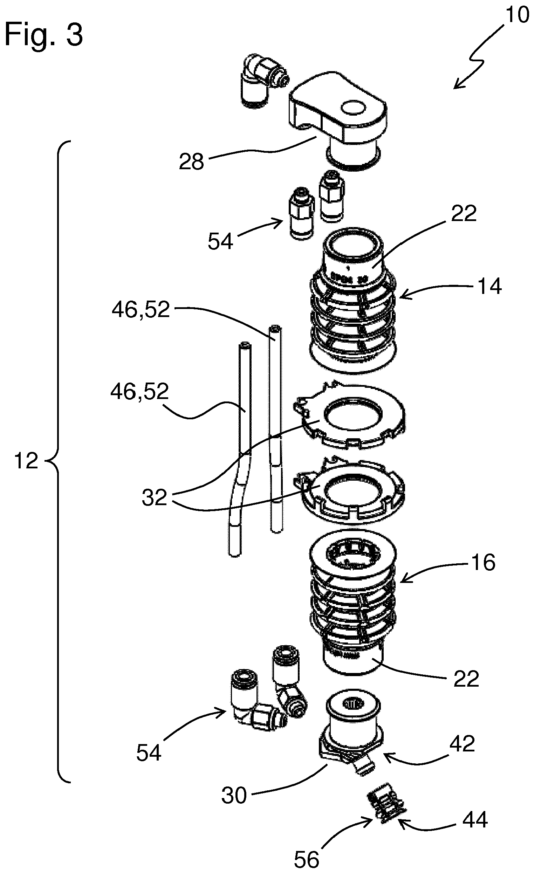

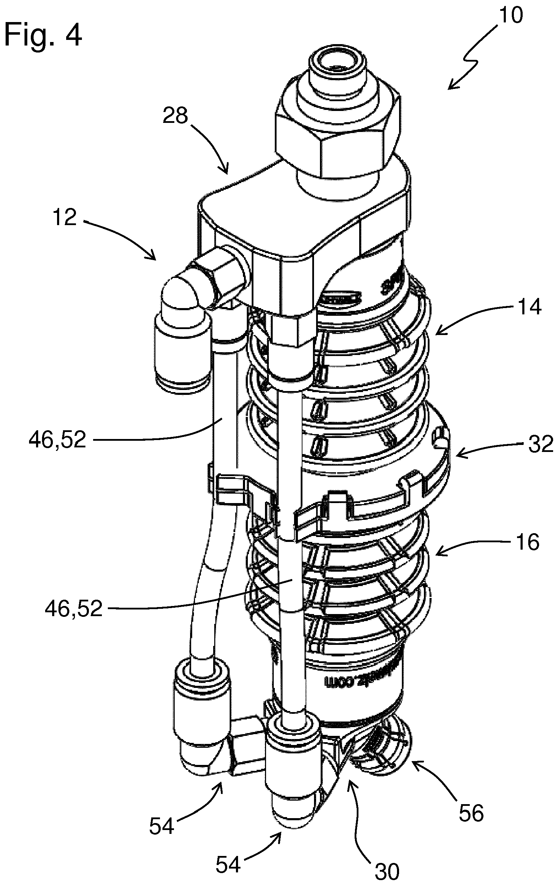

Wie in den Figuren 3 und 4 gezeigt, kann das Rückstellelement 46 als elastisch dehnbares und/oder elastisch stauchbares Federelement ausgebildet sein, z.B. in der Form von elastisch dehnbaren Druckschläuchen 52. Die Druckschläuche 52 sind einerseits mit der oberen Stutzenanbindung 28, andererseits mit der unteren Stutzenanbindung 30 verbunden. Hierzu können Standardbauteile verwendet werden.

Im dargestellten Beispiel ist die obere Stutzenanbindung 28 als Einschubteil ausgestaltet, welche in den Endstutzen 22 des ersten Sauggreifers 14 eingesetzt wird und gleichzeitig die Verbindung zur Unterdruckversorgung bereitstellt. In diesem Fall die obere Stutzenanbindung 28 entsprechende Anschlüsse für Schlauchverbinder 54 aufweisen, in welche die Druckschläuche 52 eingefasst werden können. Auch die untere Stutzenanbindung weist insbesondere entsprechende Schnittstellen für Schlauchverbinder 54 auf, in welchen die entgegengesetzten Enden der Druckschläuche 52 aufgenommen werden. Dadurch sind die Druckschläuche 52 wiederum mechanisch mit der oberen Stutzenanbindung 28 und der unteren Stutzenanbindung 30 verbunden und wirken als Rückstellelement 46, welches die Kompression der Sauggreifer 14 und 16 asymmetrisch zur Längsachse einschränkt.

Im dargestellten Beispiel (Figur 3 und Figur 4) umfasst die untere Stutzenanbindung 30 auch einen Abschnitt, der als unteres Abschlusselement 42 wirkt. In dieses untere Abschlusselement 42 ist ein Sauggreifelement 56 integriert, welches zum Ansaugen eines zu manipulierenden Objektes dient. Dieses Sauggreifelement kann als üblicher Sauggreifer (z.B. Faltenbalgsauger) ausgebildet sein. Zur Unterdruckversorgung des Sauggreifelements 56 kann der Versorgungs-Unterdruck durch die Druckschläuche 52 geführt werden, die gleichzeitig als Rückstellelement 46 für den mechanischen Aktor 10 bzw. für die Anbauanordnung 12 wirken.

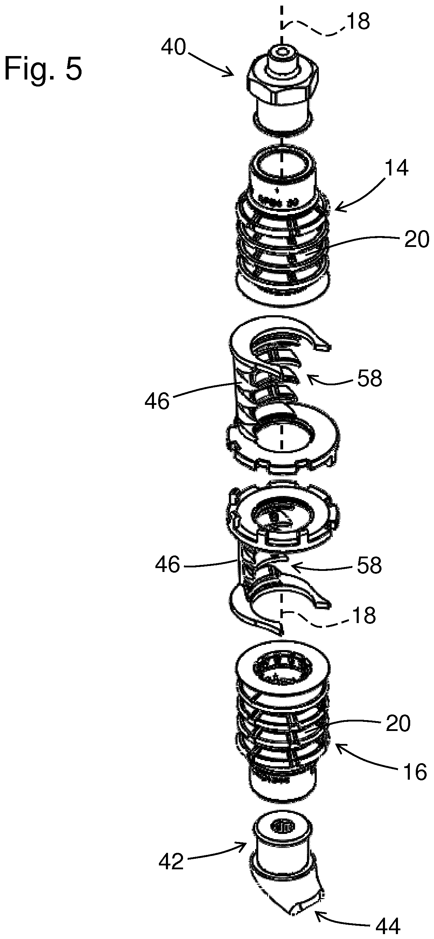

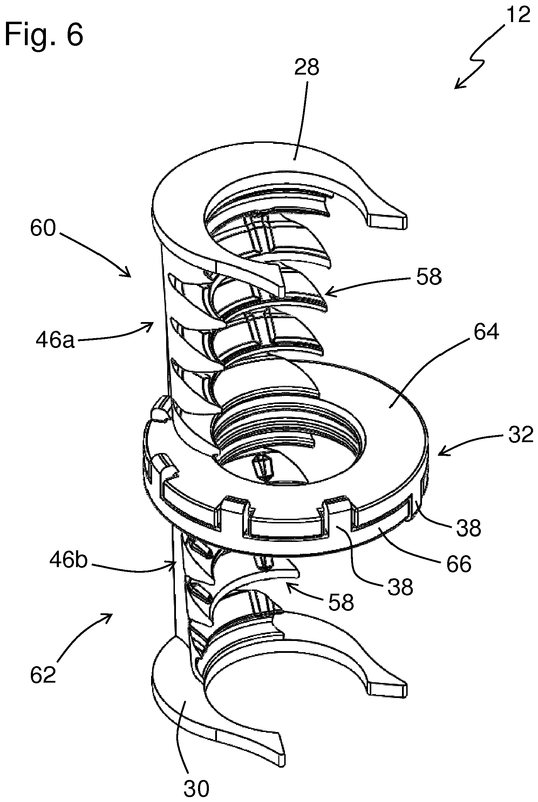

Für faltenbalgartig ausgestaltete Sauggreifer 14 und 16 umfasst das Rückstellelement 46 vorzugsweise einen Formabschnitt 58 zum Eingriff in Falten des Faltenbalges 20 (vgl. Figuren 5 und 6). Insofern ist der Formabschnitt 58 komplementär zur Außenseite des Faltenbalges 20 der einzusetzenden Sauggreifer 14 bzw. 16 ausgebildet. Dabei ist das Rückstellelement 46 wiederum asymmetrisch zur Längsachse 18 ausgebildet, z.B. dadurch, dass der Formabschnitt 46 nur einen begrenzten Winkelsektor um die Längsachse 18 und lateral versetzt zur Längsachse 18 angeordnet ist. Dadurch, dass der Formabschnitt 58 in die Falten des Faltenbalges 20 eingreift, wird der Balg 20 in den eingegriffenen Bereichen in seiner Kompressionsfähigkeit eingeschränkt.

In der Figur 6 ist die Anbauanordnung 12 aus Figur 5 im Detail dargestellt. Ein besonders einfacher Aufbau ergibt sich dadurch, dass die Anbauanordnung 12 im Wesentlichen aus zwei Baueinheiten (obere Baueinheit 60, untere Baueinheit 62) aufgebaut ist. Die Baueinheiten 60 und 62 sind insbesondere jeweils als einstückige Gebilde ausgestaltet (z.B. aus Kunststoff). Im dargestellten Beispiel umfasst die obere Baueinheit 60 die obere Stutzenanbindung 28, ein oberes Federteil 46a und einen oberen Fassungsabschnitt 64. Die untere Baueinheit 62 umfasst entsprechend die untere Stutzenanbindung 30, ein unteres Federteil 46b sowie einen unteren Fassungsabschnitt 66.

Der obere Fassungsabschnitt 64 und der untere Fassungsabschnitt 66 können miteinander verbunden werden und so die Lippenfassung 32 bereitstellen. Hierzu sind insbesondere Rastelemente 38 an den Fassungsabschnitten 64 und 66 vorgesehen, die ineinander verrasten können.

Wenn der obere Fassungsabschnitt 64 und der untere Fassungsabschnitt 66 miteinander verbunden sind (vgl. Figur 6) so stellen die Federteile 46a und 46b gemeinsam wiederum das Rückstellelement 46 bereit. Insofern ist in diesem einfachen Fall die Anbauanordnung 12 modular aus der oberen Baueinheit 60 und der unteren Baueinheit 62 aufgebaut.

Im dargestellten Beispiel weisen das obere Federelement 46a und das untere Federelement 46b jeweils Formabschnitte 58 der beschriebenen Art zum Eingriff in Falten eines faltenbalgartigen Sauggreifers auf. Diese Ausgestaltung ist jedoch nicht zwingend. Denkbar ist auch, dass die Federteile 46a, 46b eine andere Ausgestaltung aufweisen, z.B. in der gemäß einer der übrigen, vorstehend beschriebenen Ausgestaltungsmöglichkeiten.

Da sich das Rückstellelement 46 von der oberen Stutzenanbindung zur unteren Stutzenanbindung erstreckt und insofern entlang der gesamten Länge des mechanischen Aktors 10 verläuft, können an oder in dem Rückstellelement 46 in vorteilhafter Weise Fluidleitungen, Druckluftleitungen oder elektrische Leitungen integriert werden.

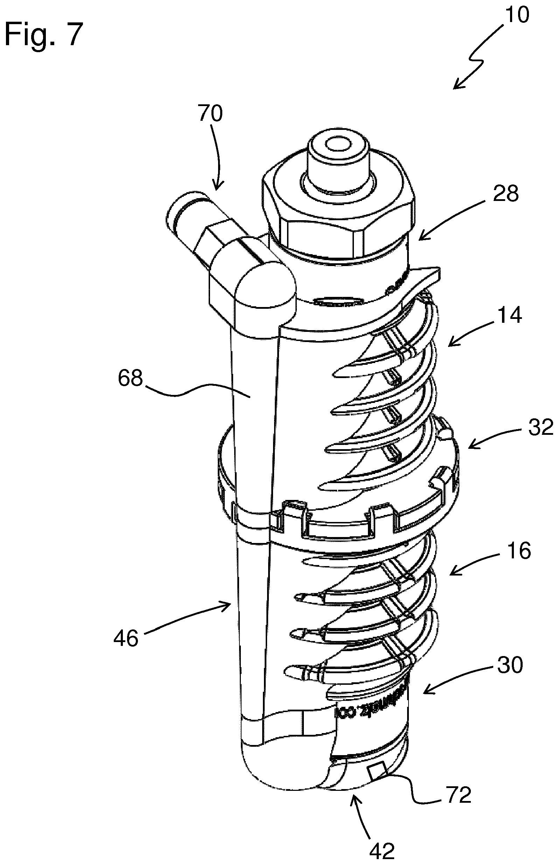

Wie z.B. in der Figur 7 als weitere Ausgestaltung der Anbauanordnung 12 gemäß Figur 6 gezeigt, kann in das Rückstellelement 46 ein Versorgungskanal 68 mit einem Versorgungsanschluss 70 integriert sein. Der Versorgungskanal 46 kann z.B. dazu dienen, ein an dem unteren Abschlusselement 42 angeordnetes Sauggreifelement (vgl. z.B. Figur 4) mit Unterdruck zu versorgen.

In der Figur 7 ist außerdem ein Sensorelement 72 skizziert, das im dargestellten Beispiel an dem unteren Abschlusselement 42 angeordnet ist und z.B. als Drucksensor oder Näherungssensor oder Kraftsensor ausgebildet ist. Hiermit kann z.B. der Betriebszustand des Aktors 10 und/oder das Vorhandensein eines zu manipulierenden Objekts detektiert werden. Entsprechende Steuerleitungen oder Versorgungsleitungen (nicht näher dargestellt) können durch das Rückstellelement 46 geführt sein und/oder in das Rückstellelement 46 integriert sein.

Anhand der Figuren 8 und 9 wird beispielhaft die Funktionalität des mechanischen Aktors 10 erläutert. Der erste Sauggreifer 14 und der weitere Sauggreifer 16 sind, wie erläutert, mittels der Lippenfassung 32 miteinander verbunden, so dass sich in ihnen ein gemeinsamer Balginnenraum 74 erstreckt. Der Balginnenraum 74 kann z.B. durch das obere Abschlusselement 40 mit Unterdruck beaufschlagt werden. Das Rückstellelement 46 erstreckt sich von der oberen Stutzenanbindung 28 zur unteren Stutzenanbindung 30 lateral versetzt zur Längsachse 18 und wirkt insofern asymmetrisch zur Längsachse 18. Bei Beaufschlagung des Balginnenraums 74 mit Unterdruck werden die Bälge 20 der Sauggreifer 14 und 16 zur Kompression gezwungen. Aufgrund der asymmetrischen Wirkung des Rückstellelements 46 führt dies zu einer lateralen Auslenkung des Aktors 10, wie in Figur 9 dargestellt. Der mechanische Aktor 10 kann insofern als Greiffinger eingesetzt werden. Die mechanische Kontaktfläche 44 des unteren Abschlusselements 42 dient dann dazu, ein Objekt zu manipulieren bzw. zu halten.

## Patentansprüche

1. Anbauanordnung (12) zum Anbau an elastisch verformbare Sauggreifer, welche jeweils ein erstes Ende (22) und ein zweites Ende (24) sowie einen sich um eine Längsachse (18) erstreckenden, komprimierbaren Balg (20) aufweisen, die Anbauanordnung (12) umfassend:
- eine obere Anbindungseinheit (28), in welche das erste Ende (22) oder das zweite Ende (24) eines ersten Sauggreifers (14) aufnehmbar ist,
- eine untere Anbindungseinheit (30), in welche das erste Ende (22) oder das zweite Ende (24) eines weiteren Sauggreifers (16)aufnehmbar ist, ,
- eine Aufnahme (32), in welche das nicht in der oberen Anbindungseinheit (28) aufgenommene Ende des ersten Sauggreifers (14) und zusätzlich das nicht in der unteren Anbindungseinheit (30) aufgenommene Ende des weiteren Sauggreifers (16) aufnehmar ist,
- ein Rückstellelement (46), welches mit der oberen Anbindungseinheit (28) und mit der unteren Anbindungseinheit (30) derart mechanisch verbunden ist, dass durch die Wirkung des Rückstellelements (46) eine Komprimierung des Balgs (20) des ersten Sauggreifers (14) und des weiteren Sauggreifers (16) asymmetrisch bezüglich der jeweiligen Längsachse (18) eingeschränkt ist.

2. Anbauanordnung (12) nach Anspruch 1, wobei die obere Anbindungseinheit (28), die untere Anbindungseinheit (30), die Aufnahme (32) und das Rückstellelement (46) dazu ausgebildet sind, jeweils außerhalb des Balges (20) des ersten und des weiteren Sauggreifers (14, 16) angeordnet zu sein.

3. Anbauanordnung (12) nach Anspruch 1 oder 2, wobei sich das Rückstellelement (46) von der oberen Anbindungseinheit (28) zur unteren Anbindungseinheit (30) asymmetrisch in Bezug auf die Längsachse (18) erstreckt, insbesondere seitlich zu der Längsachse (18) versetzt verläuft.

4. Anbauanordnung (12) nach einem der vorherigen Ansprüche, wobei die obere und die untere Anbindungseinheit (28, 30) derart angeordnet sind, dass die Längsachse (18) des ersten Sauggreifers (14) und die Längsachse (18) des weiteren Sauggreifers (16) fluchten.

5. Anbauanordnung (12) nach einem der vorherigen Ansprüche, wobei das Rückstellelement (46) auch mit der Aufnahme (32) mechanisch verbunden ist.

6. Anbauanordnung (12) nach einem der vorherigen Ansprüche, welche zum Anbau an Sauggreifer eingerichtet ist, deren erstes Ende als Endstutzen (22) ausgebildet ist und deren zweites Ende als Saugseite (24) ausgebildet ist, welche eine Dichtlippe (26) aufweist,
wobei die obere Anbindungseinheit als obere Stutzenanbindung (28) ausgebildet ist, in welche der Endstutzen (22) eines ersten Sauggreifers (14) aufnehmbar ist,
und wobei die untere Anbindungseinheit als untere Stutzenanbindung (30) ausgebildet ist, in welche der Endstutzen (22) des weiteren Sauggreifers (16) derart aufnehmbar ist, dass die Dichtlippe (26) des weiteren Sauggreifers (16) der Dichtlippe (26) des ersten Sauggreifers (14) zugewandt ist.

7. Anbauanordnung (12) nach Anspruch 6, wobei die Aufnahme als Lippenfassung (32) ausgebildet ist, in welche die Dichtlippe (26) des ersten Sauggreifers (14) und die Dichtlippe (26) des weiteren Sauggreifers (16) aufnehmar ist.

8. Anbauanordnung (12) nach Anspruch 7, wobei die Lippenfassung (46) einen ersten Klemmabschnitt (34) und einen zweiten Klemmabschnitt (36) aufweist, welche dazu ausgebildet sind, die Dichtlippe (26) des ersten Sauggreifers (14) und die Dichtlippe (26) des weiteren Sauggreifers (16) aneinander anliegend zwischen dem ersten und dem zweiten Klemmabschnitt einzuklemmen.

9. Anbauanordnung (12) nach einem der vorherigen Ansprüche, wobei das Rückstellelement (46) als federnd biegbares Federelement (48) ausgebildet ist und elastisch aus einer Ruhelage verformbar ist, wobei die Verformung aus der Ruhelage mit einer seitlichen Verbiegung des Federelements (48) verbunden ist.

10. Anbauanordnung (12) nach einem der vorherigen Ansprüche, wobei das Rückstellelement (46) als elastisch dehnbares und/oder elastisch stauchbares Federelement (52) ausgebildet ist und elastisch aus einer Ruhelage verformbar ist, und wobei die Verformung aus der Ruhelage mit einer longitudinalen Dehnung und/oder Stauchung des Federelements verbunden ist.

11. Anbauanordnung (12) nach einem der vorherigen Ansprüche, wobei das Rückstellelement (46) einen Formabschnitt (58) aufweist, welcher dazu angepasst ist, einige oder alle Falten des faltenbalgartig ausgebildeten Balges (20) des ersten und/oder des weiteren Sauggreifers (14, 16) in einem eingeschränkten Bereich des Umfanges des Balges (20) auszufüllen.

12. Anbauanordnung (12) nach einem der vorherigen Ansprüche, wobei die Aufnahme (32) einen oberen Fassungsabschnitt (64) und einen unteren Fassungsabschnitt (66) aufweist und das Rückstellelement (46) ein oberes Federteil (46a) und ein unteres Federteil (46b) umfasst, wobei der obere Fassungsabschnitt (64) und das obere Federteil (46a) und die obere Anbindungseinheit (28) einstückig miteinander verbunden sind und/oder wobei der untere Fassungsabschnitt (66) und das untere Federteil (46b) und die untere Anbindungseinheit (30) einstückig miteinander verbunden sind.

13. Anbauanordnung (12) nach einem der vorherigen Ansprüche, wobei ein unteres Abschlusselement (42) vorgesehen ist, welches dazu angepasst ist, an die untere Anbindungseinheit (30) und/oder an das in der unteren Anbindungseinheit (30) aufgenommene Ende des weiteren Sauggreifers (16) angeordnet zu sein, wobei das untere Abschlusselement (42) eine mechanische Kontaktfläche (44) zur Anlage an ein zu greifendes Objekt aufweist.

14. Anbauanordnung (12) nach Anspruch 12, wobei das untere Abschlusselement (42) ein Sauggreifelement (56) zum Ansaugen eines zu greifenden Objekts aufweist.

15. Mechanischer Aktor (10) umfassend:
- einen ersten Sauggreifer (14) und einen weiteren Sauggreifer (16);
- und eine Anbauanordnung (12) nach einem der vorherigen Ansprüche, welche an den ersten und den weiteren Sauggreifer (14, 16) angebaut ist.
